Europäisches Patentamt
European Patent Office
Office européen des brevets

(19) (11) Publication number: 0 279 108 A2

# EUROPEAN PATENT APPLICATION

(12)

(21) Application number: 87309407.2

(51) Int. Cl.⁴: A01N 3/00

(22) Date of filing: 23.10.87

The title of the invention has been amended (Guidelines for Examination in the EPO, A-III, 7.3).

(30) Priority: 04.09.87 US 93796
11.06.87 US 61916
23.10.86 US 922538

(43) Date of publication of application:
24.08.88 Bulletin 88/34

(84) Designated Contracting States:
BE DE ES FR GB IT NL

(71) Applicant: Baker, Marion A.
18161 Windsor
Orange California 92667(US)

(72) Inventor: Baker, Marion A.
18161 Windsor
Orange California 92667(US)

(74) Representative: Myerscough, Philip Boyd et al
J.A.Kemp & Co. 14, South Square Gray's Inn
London, WC1R 5EU(GB)

## (54) Process for preserving plants or parts thereof.

(57) Flower blooms and other natural predominantly carbohydrate products such as flower stems, leaves and vegetables which are free standing and have a natural fresh and/or esthetically attractive appearance and preserved over prolonged periods by removing most of the water present and cross-linking the dried substrate or treating the dried substrate with a reactive thermoplastic elastomeric polymer.

EP 0 279 108 A2

Xerox Copy Centre

## SUMMARY OF THE INVENTION

Briefly, this invention comprises preserved flower blooms and other natural predominantly carbohydrate products such as flower stems, leaves, and vegetables, sometimes hereinafter referred to simply as a substrate, being free standing and having a natural fresh appearance maintained over prolonged periods.

This invention further includes the process of obtaining preserved flower blooms and other natural predominantly carbohydrate products such as flower stems, leaves and vegetables which are free standing and have a natural fresh appearance maintained over prolonged periods which comprises removing most or substantially all of the water present in the substrate, said substrate including naturally occurring active hydrogen compounds as part of its structure, exposing the substantially dried substrate to a cross-linking compound containing a plurality of groups which are complementary reactive with the said active hydrogen groups to form a high molecular weight three dimensional cross-linked polymeric network between the active hydrogen groups of said substrate and the compound containing said complementary reactive groups.

In another aspect, this invention includes, a process of dehydrating flower blooms, and other natural carbohydrate products such as flower stems, leaves and vegetables with good shape and color retention which comprises immersing such substrate in a water-miscible, organic solvent which forms a minimum boiling point azeotrope with water, and evaporating the solvent-water mixture in a controlled atmosphere that keeps the water vapor concentration leaving the substrate in the evaporating gas greater than it is in the liquid present.

Still further, the present invention comprises the process of obtaining preserved flower blooms and other natural predominantly carbohydrate products such as flower stems, leaves and vegetables which are free standing and have a natural fresh appearance maintained over prolonged periods which comprises removing most or substantially all of the water present in the substrate, and exposing the substantially dried substrate to a thermoplastic elastomeric polymer capable of forming sparingly chemically linked or non-chemically bonded links with itself.

And further yet, this invention also includes the product prepared by removing most or substantially all of the water present in a substantially carbohydrate substrate, and exposing the substantially dried substrate to an elastomeric polymer capable of forming sparingly chemically linked or non-chemically bonded links with itself.

The blooms and other substrates of this invention are flexible and durable, and are unaffected by normal variations of temperature, humidity and light. They are not permanently deformed by heat and pressure the way an un-crosslinked material would be, and they are not affected by casual exposure to liquid water.

No other preserved or artificial flowers possess all of these properties, nor do they appear to be "alive", as this product does.

## DESCRIPTION OF PREFERRED EMBODIMENTS

I. The following generally describe the carbohydrate substrates useful in the practice of this invention. Substrates contain active hydrogen atoms not including water, the water having been substantially removed by priod dehydration.

For example:

A. Flowers Blooms

B. Flower Stems and Leaves

C. Vegetable

It is is quite easy to preserve a great number of blossoms, blooms, and vegetable matter. Such things as Roses, Orchids, Bougainvillia, Gardenia and even Tulips have been successfully preserved according to this invention with remarkable fidelity.

II. Functionally reactive compounds containing one or more active hydrogen groups can optionally be applied to substrates to infiltrate, include the familiar glycols, sorbitol, alkylene dithiols, hydroxy carboxylic acids, amides, and the like.

These compounds contain at least one and usually two or more, reactive hydrogen moieties i.e. R-OH, $R(OH)^2$, H2NCO-R-OH, etc. and they may also contain other reactive moieties such as R=O, -C=C-, R-COOH, allyl, acetylenic, etc.

Particularly preferred compounds are:

A. Polymer acetals (Polyvinyl formal, polyvinyl butyral, etc.) containing some hydroxyl groups.

B. Polyols, that is, substances containing hydroxy groups such as:

1. Polyether polyols such as poly tetra hydro furan, polyethylene/polypropylene glycols, and polythiols.

2. Polester polyols such as polycaprolactones.

3. Aliphatic polyamides, low mol weight nylons.

4. Polyacrylate/methacrylate polyols.

5. Polyolefin polyols.

6. Alkyds contianing Hydroxyl groups.

7. Sugars and modified sugars.

8. Epoxies

9. Low mol weight polyols such as butane diol trimethyol propane, and Sorbitol.

C. Compounds with differing active hydrogen groups in the same molecule such as lactic acid, hydroxyl ethyl acrylamide or dihydroxhyethyl maleate.

The compound of II are not required, but can be used in one preferred embodiment of the invention.

III. Substances that will react "in situ" with substances named in I and II (if present) in the essential absence of water to form a composite polymer network containing elements of I, II, (if present) and III.

These compounds contain a plurality of groups having complementary reactivity with substances named in I and II (if present) and include:

A. Aromatic and aliphatic isocyanates (TDI, MDI, HMDI, etc.) and prepolymer isocyanates and NCO terminated polymers, and certain NCO containing derivitives.

B. Polyfunctional aldehydes

1. glyoxal

2. glutaraldehyde

3. acrolein

C. Functional resins suah as melamine, hexamethylol melamine, uerau-formaldehyde and phenol-formaldehyde. (most all aminoplasts).

D. Polyamide-epichlorohydrin resins.

E. Werner type complexes

F. Organic titanates

It is often preferred to use a non-yellowing polyurethane prepolymer to cross-link. One preferred cross-linker is methylene bis (4-cyclohexyl) diisocyanate. Since it is less reactive than its aromatic analog, additional dibutyl tin dilaurate catalyst is needed, as well as cure temperatures in the 130-180° F. range.

Reaction involves I, II, (if present) and III simultaneousl or serially to form a finished product.

Many methods of introducing substance II (if present) into substance I are contemplated such as : use of volatile ether solvents, volatile amide solvents, volatine ester solvent, volatile alcohol solvent, volatile ketone solvent, volatile hydrocarbon solvent, volatile chlorinated organic solvent, or mixtures or molecules containing more than one of the moieties mentioned above.

Also, substance II (if present) materials that are liquid can be introduced by immersing substance I materials in them.

The following examples are presented to illustrate the invention and is not limiting in any way.

EXAMPLE 1

A freshly cut rose bloom with a large hole drilled in the recepticle, is immersed in 80/20% by volume mixture of tertiary butyl alcohol and isopropyl alcohol at about 32° F. for 48 hours. The rose is then removed and dried in a dry nitrogen gas jet for a few minutes to remove excess alcohols. The rose is then dried under vacuum (100 mm Hg Pressure Absolute) for one hour. The rose is next immersed in a 10% solution of polyvinyl formal in diacetone alcohol. Then the rose is then placed in a high vacuum of $25^{-100}$ Hg for several hours after which is emerges in a substantially dry state impregnated with polyvinyl formal.

The rose is then immersed in a mixture of ethyl acetate containing 10% of an MDI prepolymer (equivalent weight of 242). The rose is then placed in a dry nitrogen atmosphere for 24 hours at 100° F. The product that emerged is quite reminiscent in shape, color, and appearance of the original rose and has not lost any form or shape after one year. The bloom is still tough and flexible.

When the foregoing is repeated using a high mol weight hydroxyl-terminated polyethylene/prophylene glycol and methylene bis(4-cyclohexyl) diisocyanate plus dibutyldilorate, similar results are obtained if bloom is heated to 160° F. in dry nitrogen atmosphere for several hours.

Several other variations on the foregoing are also within the scope of this invention. For example, acrylate and/or polycoporlactone, polyacrylic/methacrylic esters, polyethers that have more than one hydroxyl function may be used.

It has also been found that certain alcohol soluble resins such as shellac and/or polymers such as roisn, hydrogenated rosin and polyvinyl acetal can be beneficially added to the alcohol treating solution in order to increase the strength of the bond between the petal and the recepticle in later handling procedures. Of equal importance is the fact that all the flower parts are exceedingly brittle at this state and must be manipulated with extreme care. The resin and/or polymer increases the threshold of force that will cause damage in the handling procedures when the flower is removed from the dehydrating solution.

EXAMPLE 2

A fresh "Privet" rose bloom, with hole in the recepticle, was placed in a glass jar containing one quart of 99.8% isopropyl alcohol at a temperature of 32° F, in which had been dissolved 8 grams of 50% phosporic acid and 5 grams of Irganox 245 antioxidant.

After being held for 2 days at 32° F in this sealed container, the bloom was removed, excess solvent was removed from it by briefly blowing dry nitrogen gas on it, and it was then quickly placed in a one gallon polyethylene bucket that had one inch of granulated dessicating clay on its floor. The bucket was then sparged with dry nitrogen gas for 30 seconds and a flat methacrylate sheet (1 8" thick) was placed over the opening.

After 24 hours the dried bloom was removed and dipped in a solution containing:

20 parts - Tone polymer P-300 (a linear polyester diol from caprolactone, Mol. weight 11,000 Equivalent weight-5500, Union Carbide)
1 part-methylene diphenyldiisocyanate
trace - dibutyl tin dilaurate
79 parts-methyl ethyl ketone

The bloom was then removed from the solution and placed in dry air and held at a temperature of 130° F for 2 hours. The resultant product was quite flexible and tough, and life like in appearance and is unaffected by normal variations of temperature, humidity and light.

EXAMPLE 3

A fresh "Privet" rose bloom, with hole in the recepticle, was placed in a glass jar containing one quart of 99.8% isopropyl alcohol at a temperature of 40° F, in which had been dissolved 5 grams of Irganox 245 antioxidant.

After being held for 2 days at 40° F in this sealed container, the bloom was removed, excess solvent was removed from it by briefly blowing dry nitrogen gas on it, and it was then quickly placed in a one gallon polyethylene bucket that had one inch of granulated dessicating clay on its floor. The bucket was then sparged with dry nitrogen gas for 30 seconds and a flat methacrylate sheet (1 8" thick) was placed over the opening.

After 24 hours the dried bloom was removed and dipped in a solution containing:

20 parts - Tone polymer P-300 (diol capped poly caprolactone Mol. wt. 11,600, Equivalent weight = 5,500, Union Carbide)
1 part-methylene diphenyldiisocyanate
trace - dibutyl tin dilaurate
79 parts-methyl ethyl ketone

The bloom was then removed from the solution and placed in dry air and held at a temperature of 130° F for 2 hours.

The resultant product was quite flexible and tough, and life like in appearance, but somewhat more purple than the original bloom. It is unaffected by normal variations of temperature, humidity and light. It also, is not permanently deformed by pressures that deform thermoplastic materials.

EXAMPLE 4

A fresh "Bacarra" rose bloom, with hole in the recepticle, was placed in a glass jar containing one quart of 99.8% isopropyl alcohol at a temperature of 32° F, in which had been dissolved 8 grams of 50% phosporic acid.

After being held for 2 days at 32° F in this sealed container, the bloom was removed, excess solvent was removed from it by briefly blowing dry nitrogen gas on it, and it was then quickly placed in a one gallon polyethylene bucket that had one inch of granulated dessicating clay on its floor. The bucket was then sparged with dry nitrogen gas for 30 seconds and a flat methacrylate sheet (1/8" thick) was placed over the opening.

After 24 hours the dried bloom was removed and dipped in a solution containing:

20 parts - Tone polymer P-300

2 parts - Resimene 970 (Urea-Formaldehyde resin Monsanto))

1/2 part - 38% Sulfuric acid

78 parts - mixture of ethyl ketone 70%-isopropyl alcohol 30°

The bloom was then removed from the solution and placed in dry air and held at a temperature of 180° F for 4 hours.

The resultant product was somewhat flexible and tough, and life like in appearance, and excellent clarity of color.

EXAMPLE 5

A fresh "Privet" rose bloom, with hole in the recepticle, was placed in a glass jar containing one quart of 99.8% isopropyl alcohol at a temperature of 40° F, in which had been dissolved 5 grams of Irganox 245 antioxidant.

After being held for 3 days at 40° F in this sealed container, the bloom was removed, excess solvent was removed from it by briefly blowing dry nitrogen gas on it, and it was then quickly placed in a one gallon large mouth glass bottle, a lid with a small 1/2" hole was screwed on the bottle and the bottle was held at a temperature 120° F for 24 hours.

After 24 hours the dried bloom was removed and dipped in a solution containing:

18 parts - Terathane 1000 (polyTHF diol))

2 parts - Tone polyol 301 (Triol low mol. weight based on Caprolactone)

7 parts - Methylene diphenyl diisocyanate

trace - dibutyl tin dilaurate

68 parts - methyl ethyl ketone

The bloom was then removed from the solution and placed in dry air and held at a temperature of 130° F for 2 hours.

The resultant product was flexible and tough, and life like in appearance, and excellent clarity of color.

EXAMPLE 6

A fresh "Privet" rose bloom, with hole in the recepticle, was placed in a glass jar containing one quart of 99.8% isopropyl alcohol at a temperature of 45° F, in which had been dissolved 8 grams of 50% phosporic acid.

After being held for 1 day at 45° F in this sealed container, the bloom was removed, excess solvent was removed from it by briefly blowing dry nitrogen gas on it, and it was then quickly placed in a one gallon polyethylene bucket that had one inch of granulated dessicating clay on its floor. The bucket was then sparged with dry nitrogen gas for 30 seconds and a flat methacrylate sheet (1/8" thick) was placed over the opening.

After 24 hours the dried bloom was removed and dipped in a solution containing:

20 parts - Terathane 1000 = ( a poly tetrahydrofuran diol-mol weight, 980, Equivalent weight 490, du Pont)

5 parts - Resimene 970 (a fast curing UF resin monsanto)

3 parts - 38% sulfuric acid

73 parts-(methyl ethyl ketone 70% -isopropryl alcohol 30%)

The bloom was then removed from the solution and placed in dry air and held at a temperature of 180° F for 4 hours.

The resultant product was rather frangible, but gave a glossy, wet appearance and bright color and is unaffected by normal variations of temperature, humidity and light.

EXAMPLE 7

A fresh "Privet" rose bloom, with hole in the recepticle, was placed in a glass jar containing one quart of 99.8% isopropyl alcohol at a temperature of 40° F, in which had been dissolved 8 grams of 50% phosporic acid.

After being held for 2 days at 40° F in this sealed container, the bloom was removed, excess solvent was removed from it by briefly blowing dry nitrogen gas on it, and it was then quickly placed in a one gallon polyethylene bucket that had one inch of granulated dessicating clay on its floor. The bucket was then sparged with dry nitrogen gas for 30 seconds and a flat methacrylate sheet (1/8" thick) was placed over the opening.

After 24 hours the dried bloom was removed and dipped in a solution containing:

20 parts - RJ-1000 Resious Polyol (A styrene-allyl alcohol copolymer. Mol weight 2340 equivalent weight 300)
10 parts - Resimene 970 (fast cure UF resin) Monsanto
3 parts - 38% sulfuric acid
67 parts - (methyl ethyl ketone 70% isopropyl alcohol 30%)

The bloom was then removed from the solution and placed in dry air and held at a temperature of 180° F for 2 hours.

The resultant product was rigid and frangible and is easily mistaken for porcelain. The color is brilliant and is unaffected by normal variations of temperature, humidity and light, in fact, it was unaffected when washed in an automatic dishwahes (no soap, no heat).

EXAMPLE 8

A fresh "Privet" rose bloom, with hole in the recepticle, was placed in a glass jar containing one quart of 99.8% isopropyl alcohol at a temperature of 40° F, in which had been dissolved 8 grams of 50% phosporic acid and 5 grams of Irganox 245 antioxidant.

After being held for 2 days at 40° F in this sealed container, the bloom was removed, excess solvent was removed from it by briefly blowing dry nitrogen gas on it, and it was then quickly placed in a one gallon polyethylene bucket that had one inch of granulated dessicating clay on its floor. The bucket was then sparged with dry nitrogen gas for 30 seconds and a flat methacrylate sheet (1/8" thick) was placed over the openinng.

After 24 hours the dried bloom was removed and dipped in a solution containing:

20 parts - (Cargill) short oil now drying alkyl containing excess residual primary hydroxyls. Equivalent weight = Ca 500, mol weight = not applicable
8 parts - Hydrogenated methylene diphenyldiisocyanate
trace - dibutyl tin dilaurate
20 parts - Xylene
59 parts - methyl ethyl ketone

The bloom was then removed from the solution and placed in dry air and held at a temperature of 160° F for 24 hours.

The resultant product was quite flexible and life like in appearance and is unaffected by normal variations of temperature, humidity and light.

EXAMPLE 9

A fresh "Privet" rose bloom, with hole in the recepticle, was placed in a glass jar containing one quart of 99.8% isopropyl alcohol at a temperature of 32° F, in which had been dissolved 8 grams of 50% phosporic acid and 5 grams of Irganox 245 antioxidant.

After being held for 2 days at 32° F in this sealed container, the bloom was removed, excess solvent

was removed from it by briefly blowing dry nitrogen gas on it, and it was then quickly placed in a one gallon polyethylene bucket that had one inch of granulated dessicating clay on its floor. The bucket was then sparged with dry nitrogen gas for 30 seconds and a flat methacrylate sheet (1/8" thick) was placed over the opening.

After 24 hours the dried bloom was removed and dipped in a solution containing:

20 parts - Short oil alkyl of Example 8

10 parts - methylene diphenyldiisocyanate prepolymer from Urethane Industries Equivalent Weight = 250

trace - dibutyl tin dilaurate

20 parts - xylene

59 parts - methyl ethyl ketone

The bloom was then removed from the solution and placed in dry air and held at a temperature of 130° F for 2 hours.

The resultant product was quite flexible and tough, and life like in appearance and is unaffected by normal variations of temperature, humidity and light.

EXAMPLE 10

A fresh "Sonia" rose bloom, with hole in the recepticle, was placed in a glass jar containing one quart of 99.8% isopropyl alcohol at a temperature of 28° F, in which had been dissolved 8 grams of 50% phosporic acid.

After being held for 3 days at 32° F in this sealed container, the bloom was removed, excess solvent was removed from it by briefly blowing dry nitrogen gas on it, and it was then quickly placed in a one gallon polyethylene bucket that had one inch of granulated dessicating clay on its floor. The bucket was then sparged with dry nitrogen gas for 30 seconds and a flat methacrylate sheet (1/8" thick) was placed over the opening.

After 24 hours the dried bloom was removed and dipped in a solution containing:

20 parts - Short oil alkyl of Example 8

10 parts - Resimene 2040

trace - dibutyl tin dilaurate

70 parts - (methyl ethyl ketone 70% - isopropyl alcohol 30%)

The bloom was then removed from the solution and placed in dry air and held at a temperature of 130° F for 2 hours.

The resultant product was rigid and shiny, and is unaffected by normal variations of temperature, humidity and light.

EXAMPLE 11

A fresh "Vanda" orchid bloom, with hole in the recepticle, was placed in a glass jar containing 25 ounces of anhydeous tertiary butyl alcohol and 7 ounces of isopropyl alcohol at a temperature of 40° F.

After being held for 3 days at 40° F in this sealed container, the bloom was removed, excess solvent was removed from it by briefly blowing dry nitrogen gas on it, and it was then quickly placed in a one gallon polyethylene bucket that had one inch of granulated dessicating clay on its floor. The bucket was then sparged with dry nitrogen gas for 30 seconds and a flat methacrylate sheet (1/8" thick) was placed over the opening.

After 24 hours the dried bloom was removed and dipped in a solution containing:

20 parts - Max Polyol E-351 (an ethylene oxide capped poly propylene glycol ether, mo. wt. capped 1000, Union Carbide)

8 parts - hydrogenated methylene diphenyl diisocyanate

trace - dibutyl tin dilaurate

72 parts - methyl ethyl ketone

The bloom was then removed from the solution and placed in dry air and held at a temperature of 165° F for 24 hours.

The resultant product was somewhat rigid, good color and life like in appearance and is unaffected by normal variations of temperature, humidity and light.

EXAMPLE 12

A fresh "Janquil" bloom, with hole in the recepticle, was placed in a glass jar containing one quart of 99.8% isopropyl alcohol at a temperature of 32° F, in which had been dissolved 5 grams of Irganox 245 antioxidant.

After being held for 2 days at 32° F in this sealed container, the bloom was removed, excess solvent was removed from it by briefly blowing dry nitrogen gas on it, and it was then quickly placed in a one gallon polyethylene bucket that had one inch of granulated dessicating clay on its floor. The bucket was then sparged with dry nitrogen gas for 30 seconds and a flat methacrylate sheet (1/8" thick) was placed over the opening.

After 24 hours the dried bloom was removed and dipped in a solution containing:

2 parts - methylene diphenyldiisocyanate
trace - dibutyl tin dilaurate
98 parts - methyl ethyl ketone

The bloom was then removed from the solution and placed in dry air and held at a temperature of 80° F for 36 hours.

The resultant product looks and feels like colored paper, was somewhat rigid, and is unaffected by normal variations of temperature, humidity and light.

EXAMPLE 13

A dehydrated bloom is dipped in a solution of 100 parts of Desmolac 4125 very low hydroxyl content Polyurethane lacquer that has been let down with MEK?Toluen/TBA to 10% solids and to which has been added approximately 1 paRT OF MDI. The bloom is then rid of excess solution and held in a dry atmosphere at 100° F for one day. Then conditioned for 10 days under normal conditions. The resultant bloom is tough, but somewhat brittle and rather dull in appearance.

COMBINING SOLVENT DEHYDRATION AND CROSS LINKING WITHOUT FIRST DE-WETTING THE SUBSTRATE

Under certain circumstances, flower blooms can be cross linked without first removing the solvent that has removed most of the in vivo water. The critical factor is that the solvent itself must be water miscible at the concentration it is used and must not be reactive with the cross linking agent which is required to react with the active hydrogen atoms in the substrate.

Tertiary alcohols such as tertiary butyl alcohol and tert amyl alcohol are suitable, as is diacetone alcohol (mixed tert alcohol and ketone in one molecule). Such things as acetone, methyl ethyl ketone, ethyl acetate, diethyl ether, diisopropyl ether, tetra hydro furan, dioxane and dimethyl formamide are also suitable. The choices are so numerous as to defy a definitive list. It is important to remember that one should choose a solvent that will not react with the bloom, or the cross linking agent, or extract color from it, or cause it to become misshaped, and is rather volatile and inexpensive.

I. When cross linking flowers (and other substrates) in the solvent wet stage, there are several points to remember.

A. When cross linking solvent wetted substrates with aminoplasts (UF·MF), a relatively large amount of water and organic primary and/or secondary hydroxyls in the solvents can be tolerated since they will be driven off by heat curing, as is usual in this type of cross linking reaction. Water content must, however, still be below azeotropic levels.

B. When cross linking solvent wetted substrates with isocyanates, care must be taken to eliminate or avoid introducing water into the system, as well as any organic that maybe present in the solvent. It is quite acceptable to have large quantities of organic tertiary hydroxyls present during the cross linking because they are non-reactive with aromatic isocyanates. Water azeotroping solvents do not have to be used in this embodiment.

EXAMPLE 14

A privet rose bloom that has been partially dehydrated to about 2% water in an isopropyl alcohol dehydrating solution is removed from the dehydrating solution, drained and briefly dried with a dry nitrogen gas jet and then immersed in 50% Resimene 970 resin dissolved in an IPA/MEK mixture containing H2SO4 catalyst. After a residence time of several minutes to hours the bloom is removed, briefly drained, and then dried briefly with a dry nitrogen gas jet and placed in a controlled atmosphere oven that is electrically heated to 140 degrees F. rising to 180 degrees F. for one to six hours, that is vented in a way that allows alcohol/water vapors to escape but no air to enter. The result is a bloom that is cross linked with the appearance and properties of finely formed colored paper. The bloom is dimensionally and color stable but not as strong and durable as blooms cross linked after they have been rid of all water and solvent.

EXAMPLE 15

Same as Example 14 above except a small amount of styrene/allyl alcohol copolymer resin dissolved in MEK/IPA mixture is added to the Resimene 970 impregnating solution.

The resulting bloom is much more rigid than the previous example and quite frangible.

EXAMPLE 16

A privet rose bloom that was essentially completely dehydrated by immersion in two serial solutions of anhydrous tertiary butyl alcohol is removed and briefly drained and then immersed in a MEK/TBA mixture containing MDI prepolymer and dibutyl tin dilaurate catalyst for several minutes and again drained, then briefly nitrogen gas jet dried, and finally placed in a dry oven maintained at a temperature of 130 degrees F. for up to one hour.

The result is a bloom that is quite similar to finely formed colored paper in appearance and properties and retains both shape and color indefinitely, but it is less durable than a bloom crosslinked after it has been thoroughly dried.

SOLVENT DEHYDRATION AND SOLUTION EVAPORATION

Any conventional drying procedures can be used, such as sand and borax mixtures, silica gel, and mixtures of silica gel with sand and/or borax, activated clays, whether the substrate is surrounded by the drying agent or just in close proximity. Drying agents such as calcium sulfate and its hemi-hydrate, and concentrated sulfuric acid, etc., are also included, as is vacuum freeze drying. All substrates dry by these methods may be subsequently cross linked through active hydrogen sites.

Substrates may be solvent dehydrated by immersion in selected solvents, which are then evaporated. A very large number of permutations and combinations of treating procedures are possible, many of which are described in the prior art, therefore, it is necessary to dwell here only on those aspects of the dehydrating procedures which are novel.

The success of the solvent dehydration and evaporation process is measured by two criteria:

1. The retention of the original shape (dimensional stability) and
2. The retention of the original color. The two are apparently related but not dependent variables.

This invention proves, contrary to prior teaching, that an excellent product can result from immediate immersion of the substrate in a solvent or mixture of solvents such as monohydric alcohols and/or ketones, esters and ethers containing essentially no water--without going through the intermediate immersion steps normally described. It is also necessary to simultaneously, reduce the temperature of the solvent bath, but avoid freezing the original plant fluids. Generally, this means that one can safely reduce the temperature to as low as about 28 degrees F. at the start of the treatment.

It is also often beneficial to adjust the pH of the solvent dehydrating solution.

It is also often beneficial to add to the solvent an organic anti-oxidant from the hindered phenol or anisole groups.

And finally, in the case of substrates that have large masses that are mostly water, it is beneficial to drill holes in said masses before immersion, to facilitate diffusion of the solvent and water. For instance, it is

beneficial to drill one or several, holes in the part of the bloom known as the Receptacle. The hole or holes should be about the size of a large pin head and should reach upward into the area that is rich in water and sieves at the base of the Pistols and Stamens. Punching or piercing will also work in these operations, but not as well as drilling.

If, for example, a complete flower bloom, the receptacle of which contains a hole, is suspended in approximately one quart of an essentially anhydrous solvent at 32 degrees F. that is miscible with water and forms a minimum boiling point azeotrope (constant boiling mixture) with water, the water content of the solvent being less than the water content of the solvent/water azeotrope, will evaporate relatively faster than the solvent if water is not introduced by the surrounding air, and a perfectly preserved, dried bloom will result.

Preferred solvents are those that contain the most water in their azeotropes *, are low in cost, boil below the boiling point of water and are poor solvents for flower components. Low toxicity is also desirable. Under certain circumstances it is also necessary to employ a solvent that is not reactive with materials used in the cross linking operation that will be employed later.

*AZEOTROPE TABLE

Binary Azeotropes

| Wt% | wt% |
|---|---|
| Isopropyl alcohol | Water |
| 87.7% | 12.3% |
| Tertiary butyl alcohol | Water |
| 88.3% | 11.7% |
| Ethyl alcohol | Water |
| 95.0% | 5.0% |
| Methyl ethyl ketone | Water |
| 88.7 | 11.3 |

I have found that the solvents that most commonly meet the above-mentioned criteria are: isopropyl alcohol, tertiary butyl alcohol, or methyl ethyl ketone. A large number of other solvents will also meet the requirements of water miscibility and formation of a one phase constant boiling point mixture with water. Also, one can obviously use ternary mixture of solvents that form minimum boiling point azeotropes such as isopropyl alcohol, water and cyclohexane.

I have found it desirable to use dry gas in the controlled atmosphere because the quality of the dried substrate as well as the drying rate of the bloom is, in part, a function of water content of the surrounding gas. I have also found that ambient temperatures are more desirable than higher ones, but not essential, because the form of the bloom, and the bloom color is better.

Flowers dried in the manner just described are remarkably faithful to their living precursor. The tedious, flawed and expensive processes of multiple treating solutions, fixing solutions and clearing solutions are completely avoided.

EXAMPLE 17

I have, for example, immersed a pink "Sonia" tea rose bloom in isopropyl alcohol solution containing seven percent water for 48 hours then placed it in a stagnant sealed dry nitrogen atmosphere, the total volume being about 2/3 cubic foot, and varied the temperature from 55-75 degrees F. for 24 hours. There was no discernible change in the shape or color of the bloom, and it was still wet. I then introduced about 3 pounds of an activated dessicant clay on the floor of the container and covered the container with a flat

loose lid that allowed some vapor to escape. The container was briefly sparged every 4 hours for 24 hours with dry nitrogen to clear it of accumulated isopropyl alcohol/water vapors. At the end of the 24 hour period the bloom was essentially rid of all isopropyl alcohol and water with no discernible shape change or color loss.

Since residual water in the substrate will cause a loss of strength and color, and cause withering upon evaporation, identifying the sources of residual water and applying methods to control them is extremely important.

The most common sources of residual water.

1. Concentrated water seeps out of sequestered locations such as the receptacle of a rose bloom if complete equilibrium of all flower parts is not achieved.

2. Water in the substrate can be concentrated by the drying procedure if the surrounding air or gas contains significant amounts of water vapor since the evaporating solvent/water vapor will almost always dissolve more water vapor from humid air. This phenomenon decreases the flow of water from the liquid solvent/water solution and ultimately results in an essentially water wet substrate.

3. If the solution in which the substrate contained more water than the azeotrope equilibrium amount of the solvent/water mixture when drying begins, water concentration will build rapidly to very high levels in the substrate as it dries--thus ruining the substrate. It is interesting that ethyl alcohol azeotrope with water contains only one-half the water that IPA or TBA does, and is thus much less useful as a dehydrating solvent than IPA or TBA.

## DESCRIPTION OF ADDITIONAL PREFERRED EMBODIMENT

Substrates such as flower blooms, flower stems, leaves and vegetables are first substantially dried or dehydrated. This procedure which may involve contact with alcohol after the thicker sections have been pierced to provide access holes for the alcohol to reach the interior of the flower is fully applicable to this invention. Other weed-like substrates such as gypsophilea, statis, eucalyptus, larkspur, straw flowers, caspia, horsetail are not dehydrated with alcohols. Instead they are freeze dried, or exposed to low-humidity air, silica gel, borax or other drying agents, often in a closed or controlled atmosphere.

The elastomeric polymers used in the practice of my invention are either physically (non-chemically, including hydrogen bonding) cross-linked, or chemically cross-linked. Each of these two types is discussed separately below in more detail. As used herein, sparingly cross-linked means up to about 5% of the elastomeric portion by weight, and preferably from about 1% to 3%.

### 1. Non-Chemical Crosslinking

The elastomeric polymers are thermoplastic elastomers having dissimilar domains as explained as follows. They are physically cross linked within themselves and are thus closely related to the effect achieved by the process described in my pending patent application identified above. There are however, several important differences:

1) The elastomeric polymers of this invention do not chemically bond, i.e.--(cross link) with the cellulose in the bloom.

2) The elastomeric polymers exhibit permanent set characteristics of a thermoplastic--not thermosets, as my prior work does, and they are therefore easier to permanently deform with either physical pressure or high temperature.

3) Since the elastomeric polymers do not contain either acid or base they have virtually no effect upon the color of the treated bloom, which is often not the case with chemically cross linked systems.

4) Blooms treated with the elastomeric polymers are quite flexible and do not require a post treatment coating to flatten their appearance-they also have a warm and pleasant "hand".

The blooms are unaffected by humidity or short duration immersion in water--an important commercial point. The use of additives such as antioxidants and ultraviolet stabilizers further ensures a considerable life span for the product under normal use conditions.

There are several major classes of thermoplastic rubbers. The largest and first developed one is called linear SBS thermoplastic rubbers which have properties similar to the branched or "star" SBS thermoplastic

rubbers that were introduced almost simultaneously. These materials are made by polymerizing "blocks" of polystyrene with "blocks" of polybutadiene--thus, the nick-name "block co-polymers".

Block co-polymers are also made from polystyrene and polyisoprene, commonly referred to as SIS polymers.

The SBS and SIS polymers can be hydrogenated to form polystyrene/polyolefin copolymers. It is this latter class that I find most useful because they do not contain the residual ethylenic double bond that is present in SBS and SIS polymers.

The hydrogenated polymers such as one having an ethylene-butylene structure is better for my use than the original SBS polymer because it does not degrade as rapidly and also because it is not as elastomeric and soft as comparable SBS or SIS polymer, and as a result, resists deformation from physical pressure or high temperatures to a greater degree.

More particularly, the thermoplastic elastomeric polymers capable of forming non-chemical cross links or bonds with itself is exemplified by block copolymers having individual polymeric chains of three blocks, a flexible block in the center and a thermoplastic block at each end of the chain, or two blocks (a diblock polymer) having a flexible block and one crystalline thermoplastic end block. In addition, the flexible and crystalline thermoplastic blocks can be variously arranged in, for example, a linear alternating sequence, or the blocks can be arranged wherein there are multiple ends.

The typical end blocks are made up of polystyrene, that is, repeating units having the formula:

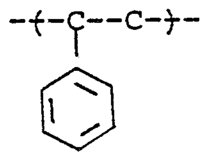

Preferably, the flexible block is in the center, and the "mid block" has a polybutadiene, polyisoprene, polyethylene, polybutylene, ethylene-propylene copolymer, or ethylene-butylene copolymer structure. The saturated structures are preferred in this situation.

The preferred polymers of the described class are available from Shell Chemical Company under the trademark "Kraton." Typical polybutadiene mid block polymers are known as Kraton D1101 & D1102. A typical polyisoprene type is known as Kraton D1107. Typical butylene types are known as Kraton G1650 and G1652. Typical ethylene-butylene types are known as Kraton G1726.

The physical cross linking occurs at the polystyrene end blocks. The polystyrene end blocks are present in minor proportion (about 10% to 35% by weight of total polymer) and are thermodynamically incompatible with the elastomeric mid block. The polystyrene end blocks having a glass transition temperature above room temperature, around 200 degrees F. The elastomeric mid block has a glass transition temperature well below room temperature. The polystyrene end blocks unite to form microscopic particles which has the effect of physically united many chains of the block copolymer. The particles or agglomerated polystyrene are called polystyrene domains and are uniformly distributed throughout the mass or film of polymer. The effect is to create a cross bonded network where the crosslinking is physical rather than chemical.

The rubber mid blocks are held in place, that is, immobilized by the polystyrene domains. Since the crosslinking is physical, it is reversible so that these rubber polymers can be heated, cooled, and solvated with loss, regain and/or change of properties.

These block copolymers are also quite stable, provide a beautiful appearance or finish on flowers and other carbohydrate substrates, and afford a natural feel or "hand" to the preserved product.

The block copolymers are of relatively low molecular weight, form good solutions in solvents with viscosities such that with one or two dips, the substrate is suffi ciently coated. The following are typical properties

Kraton G-1726
Tensile strength, psi [1] 350
Elongation, % [1] 200
Hardness, Shore A 75
Specific gravity 0.91
Brookfield viscosity,
cps @ 77° F [3] (Toluene solution) 200
Styrene/rubber weight ratio 30/70
Physical Form Pellet

G-1650 and G-1652 possess much higher tensile strength, elongation and viscosity due to their higher molecular weight. Conventional rubbers are much higher even than G-1650 and G-1652 in viscosity. This increase in viscosity renders these polymers less economically useful for the herein described purposes.

The following examples are presented solely to illustrate the invention.

**EXAMPLE 18**

Six fully opened "bridal pink" rose blooms and six fully opened "Privet" rose blooms with holes drilled in receptacles were placed in a plastic pail containing five gallons of anhydrous isopropyl alcohol, in which had been previously dissolved 4 ounces of clarified "Naval Jelly" marketed by Duro Corporation, and 2 ounces Ciba-Geigy Antioxidant "Irganox 245". The temperature of the alcohol was 35 degrees F. and it was maintained at that temperature for 48 hours. The flower blooms were removed from the alcohol, the excess alcohol adhering to the blooms was removed by a dry nitrogen gas jet and the blooms were placed in a commercial 40 gallon polyethylene garbage bag which also contained about 3 pounds of a desiccant clay. The bag was inflated with dry nitrogen gas, tied shut, and placed in front of an oscillating fan for 48 hours (temp. 65-80). The blooms were then removed and dipped in a 20 percent solution of Kraton G1726, the solvent being 40 percent toluene and 60 percent mixed heptanes. The solution also contained 0.2 percent Irganox 1010 antioxidant, 0.2 Tinuvin 328 Ultraviolet light absorber, and 0.2 percent Tinuvin light stabilizer. After dipping the blooms were drained and dried in ambient temperature moving air for a few hours to several days. They were then displayed.

The following are further and preferred embodiments:

1. Soaking in alcohol: combination of an antioxidant and phosphoric acid helps stabilize the color of the bloom.

2. Evaporating the alcohol/water solution: I have found that a thin polyethylene film is adequate for protecting the blooms from moisture re-entry from the atmosphere and allows the isopropyl alcohol to escape to the atmosphere more readily than does thicker cross-sections of polyethylene. The isopropyl alcohol escape is more rapid when the bag is placed in front of a fan. The important principle here is that polyethylene is a much better barrier for water vapor than it is for isopropyl alcohol vapor--thus, the bloom is rather quickly rid of both, isopropyl alcohol and water: Isopropyl alcohol through diffusion through the polyethylene film and water by absorption of the desiccant clay. As previously stated, if the water in the isopropyl alcohol/water mixture is greater than azeotrope quantity, the bloom will lose it's shape.

Any of the elastomeric block copolymers can be extended with oil, resins and fillers in the manner that is employed with chemically cross-linked rubbers. However, oil extension results in poorer tensile strength and better lubricity and therefore oil extended rubbers are easier to distort, so I prefer to use the Kraton without oil extension for rose bloom preservation, but oil extension does produce a product that is more acceptable for leaf and stem preservation, or for some traditional dried plant materials such as Eucalyptus leaves and stems.

Normally, pigments are not required with Kraton, since it produces a flat finish without any modification. However, when it is extended with oils or other plasticisors or resins such as maleic anhydride/rosin adducts or styrene/allyl alcohol copolymers it is often desirable to add a flatting pigment. I have found that the

[1]ASTM D 412 --tensile tester jaw separation speed 10 in./minute.

[2]Typical properties determined on case film from toluene solution.

[3]Kraton rubber at 25%w solids.

normal flatting pigments are quite opaque and hide the natural colors of the bloom. I have found that very pure fumed silica pigments and particulate polypropylene function well as flatting agents and are much more transparent than the more common flatting pigments (calcium carbonate is one example).

## 2. Chemical Crosslinking

The invention is also applicable to elastomers which are self cross-linked by use of rubber vulcanizing agents such as peroxides or upon exposure to gamma irradiation. The invention as already described is fully applicable to this embodiment. The preferred elastomers are polyisoprene, polybutadiene and butadiene-styrene random copolymer. The peroxide can be dicumyl peroxide as well as others known in the art.

## EXAMPLE 19

Four fully opened "bridal pink" rose blooms and four fully opened "Privet" rose blooms were placed in a plastic pail containing five gallons of anhydrous isopropyl alcohol, in which had been previously dissolved 4 ounces of clarified and 2 ounces Ciba-Geigy Antioxidant "Irganox 245". The temperature of the alcohol was 35 degrees F. and it was maintained at that temperature for 48 hours. The flower blooms were removed from the alcohol, the excess alcohol adhering to the blooms was removed by a dry nitrogen gas jet and the blooms were placed in a commercial 40 gallon polyethylene garbage bag which also contained about 3 pounds of a desiccant clay. The bag was inflated with dry nitrogen gas, tied shut, and placed in front of an oscillating fan in my laboratory for 48 hours (temp. 65-80). The blooms were then removed and dipped in a 5 percent solution of styrene-butadiene random copolymer polymer, the solvent being toluene. After dipping the blooms were drained and dried in ambient temperature moving air for a few hours. They were then exposed to gamma radiation for 10 hours.

## EXAMPLE 20

Ambient air dried gypsophilea is dipped in Kraton G-1726X --10% solution in 30% toluene --70% mixed hexanes and then rid of solvent by evaporation in ambient air. Imparts toughness, better handling far easier arranging and little loss of blooms when crushed or roughly handled.

## EXAMPLE 21

Ambient air dried "Silver Dollar Eucalyptus is dipped in Kraton G-1726 (100 parts) and Tufflo 6206 (ARCO) or Shell Flex 371 (Shell) oil (20 parts), total solids 10% in 50% toluene --50% mixed hexanes and then air dried. Imparts flexibility, toughness and better handling.

Having fully described the invention, it is intended that it be limited only by the lawful scope of the appended claims.

## Claims

1. The process of obtaining preserved flower blooms and other natural predominantly carbohydrate products such as flower stems, leaves and vegetables which are free standing and having a natural fresh appearance maintained over prolonged periods which comprises removing most or substantially all of the water present in the substrate, said substrate including naturally occurring active hydrogen compounds as part of its structure, and exposing the substantially dried substrate to a cross-linking compound containing a plurality of groups which are complementary reactive with the said active hydrogen groups to form a high molecular weight three dimensional cross-linked polymeric network between the active hydrogen groups of said substrate and the compound containing said complementary reactive groups.

2. The process of claim 1 whereby the substrate is first immersed in a water miscible solvent that forms a minimum boiling point azeotrope with water and is then cross-linked by introducing the cross-linking compound into the solvent/water wetted substrate and drive off the solvent/water azeotrope in a controlled atmosphere by elevating the temperature.

3. The process of claim 1 whereby the substrate is essentially dehydrated by replacement of the natural water with a non-reactive solvent and then is cross-linked by introducing the cross-linking compound into the essentially anhydrous solvent wetted substrate and cross-linking said substrate in the presence of the solvent and subsequently evaporating the solvent.

4. The process of any one of the preceding claims wherein the cross-linking compound is a polyisocyanate.

5. The process of any one of the preceding claims wherein additional active hydrogen compounds are added to the substrate and react with said cross-linking compound.

6. The process of any one of the preceding claims wherein additional active hydrogen compounds in the form of polyols are added to the substrate and react with said cross-linking compound.

7. The process of any one of the preceding claims wherein the substrate is a flower.

8. The process of any one of the preceding claims wherein the substrate has one or more holes in it prior to dehydration.

9. The process of claim 8 wherein the substrate has a bloom and the holes are in the receptacle of the bloom.

10. The process of claim 9 wherein the holes reach into the sieves at the base of the pistols and stamens, and other holes reach the bases of the sepals and still other holes reach the pedicel.

11. A process of dehydrating flower blooms, and other natural carbohydrate products such as flower stems, leaves and vegetables with good shape and color retention which comprises immersing such substrate in a water-miscible, organic solvent which forms a minimum boiling point azeotrope with water, and evaporating the solvent-water mixture in a controlled atmosphere that keeps the water vapor concentration leaving the substrate in the evaporating gas greater than it is in the liquid present.

12. The process of claim 11 wherein the substrate is a flower.

13. The process of obtaining preserved flower blooms and other natural predominantly carbohydrate products such as flower stems, leaves and vegetables which are free standing and have a natural fresh and/or esthetically attractive appearance maintained over prolonged periods which comprises removing most or substantially all of the water present in the substrate, and exposing the substantially dried substrate to a thermoplastic elastomeric polymer capable of forming sparingly chemically linked or non-chemically bonded links with itself.

14. The process of claim 13 wherein the elastomeric polymer is a block copolymer having polystyrene end blocks and a flexible mid-block which forms non-chemically bonded links with itself.

15. The process of claim 13 wherein the elastomeric polymer is a block copolymer having at least one flexible block and at least one polystyrene block.

16. The process of claims 14 or 15 wherein the flexible mid-block is polybutadiene, polybutylene, polyisoprene, ethylene-1, butene copolymer or ethylene, propylene copolymer.

17. The process of claim 13 wherein the elastomeric polymer is a vulcanized elastomer.

18. The process of claim 13 wherein the elastomeric polymer is chemically cross-linked by a rubber vulcanizing agent.

19. The process of claim 13 wherein the elastomeric polymer is chemically cross-linked by exposure to gamma irradiation.

20. The process of claim 13 wherein the elastomeric polymer is selected from polyisoprene, polybutadiene, and styrene-butadiene random copolymer.

21. The process of any one of claims 13 to 20 wherein the substrate is roses, orchids, tulips, daffodils, lillies and other ornamental blooms as well as gypophila, statis, eucalyptus,larkspur, strawflowers, cornflowers, caspia, or horsetail.

22. The process of any one of claims 13 to 21 wherein the substrate is a flower bloom.

23. The process of any one of claims 13 to 21 wherein the substrate is vegetable stem and/or vegetable leaf.

24. The process of any one of claims 13 to 23 wherein the substrate prior to water removal is a bloom, leaf and/or stem in its unaltered and natural state.

25. The process of any one of claims 13 to 23 wherein the substrate is first pierced to provide access holes and then substantially dehydrated to remove most or substantially all of the water.

26. The process of any one of claims 13 to 25 wherein the substrate additionally is treated with antioxidants, antiozonants, ultraviolet stabilizers, heat stabilizers, light absorbers and/or optical brightners.

27. The process of any one of claims 13 to 26 wherein said elastomeric polymer is oil extended.

28. The product of any one of claims 13 to 27 which are treated with fumed silica pigments or particulate polypropylene.

29. The product of any one of claims 13 to 27 which are subsequently coated with surface coatings such as leather lacquers containing fumed silica pigments or particulate polypropylene.